# EUROPEAN PATENT SPECIFICATION

(11) **EP 2 770 179 B1**
(45) Date of publication and mention of the grant of the patent: **21.06.2017**
(21) Application number: 12842344.9
(22) Date of filing: 03.10.2012
(51) Int. Cl.: F01N 3/28, F01N 3/022, B01D 53/94, D04H 1/4218

(54) **MAT MATERIAL AND EXHAUST GAS PURIFICATION DEVICE**
MATTENMATERIAL UND ABGASREINIGUNGSVORRICHTUNG
MATÉRIAU POUR NAPPES ET DISPOSITIF DE PURIFICATION DE GAZ D'ÉCHAPPEMENT

(30) Priority: 21.10.2011 JP 2011231971
(43) Date of publication of application: 27.08.2014
(73) Proprietor: Ibiden Co., Ltd, Ogaki-shi, Gifu 503-8604 (JP)
(72) Inventor: NISHI Akihito, Ogaki-shi Gifu 503-8604 (JP)
(74) Representative: Hoffmann Eitle
(86) International application number: PCT/JP2012/075607
(87) International publication number: WO 2013/058108

(56) References cited:
- WO-A1-2009/141896
- WO-A2-2013/036736
- JP-A- 2008 202 505
- JP-A- 2008 202 505
- JP-A- 2011 026 755
- JP-A- 2011 026 755
- JP-A- 2011 125 847
- JP-A- 2011 125 847

## Description

### TECHNICAL FIELD

The present invention relates to a use of a mat material and an exhaust gas purifying apparatus.

### BACKGROUND ART

Exhaust gases discharged from internal combustion engines (e.g., diesel engines) contain particulate matter (hereinafter, referred to also as PM). In recent years, the PM has been a problem as it is harmful to the environment and the human body. Since exhaust gases also contain harmful gas components such as CO, HC and NOₓ, the influence of the harmful gas components on the environment and the human body has also been concerned.

Therefore, various exhaust gas purifying apparatuses for collecting PM in exhaust gases and purifying the harmful gas components, such as CO, HC, and NOₓ, contained in exhaust gases have been developed. Such exhaust gas purifying apparatuses include those having an exhaust gas treating body formed from a porous ceramic material (e.g., silicon carbide, cordierite), a casing (e.g., metallic container) for housing the exhaust gas treating body, and a holding sealing material provided between the exhaust gas treating body and the casing.

In an exhaust gas purifying apparatus, the holding sealing material prevents damage by a contact between the exhaust gas treating body and the casing and leakage of exhaust gases from a gap between the casing and the exhaust gas treating body. The holding sealing material further prevents a fall of the exhaust gas treating body by an exhaust gas pressure. Moreover, since an exhaust gas purifying apparatus needs to keep the exhaust gas treating body at high temperatures for maintaining the reactivity, the holding sealing material is required to have heat insulating properties.

An exemplary holding sealing material meeting the above requirements is a mat material containing inorganic fibers such as alumina fibers.

Also proposed is a mat material containing glass fibers instead of alumina fibers. For example, Patent Literature 1 discloses a mat material containing glass fibers such as E-glass.

### CITATION LIST

### - Patent Literature

Patent Literature 1: JP-T 2006-516043

JP 2011-026755 discloses a mat material including glass fibers; wherein each of the glass fibers contains: on a weight basis, 52-62 wt.% of SiO₂; 9-17 wt.% of Al₂O₃; 17-27 wt.% of CaO; 0-9 wt.% of MgO; 0-4 wt.% of TiO₂; and 0-5 wt.% of ZnO; and contains substantially no B₂O₃; wherein the total sum of Na₂O and K₂O in the range of 0-2 wt.%. The mat material is to be used as a holding and sealing material in an exhaust gas purifying apparatus.

### SUMMARY OF INVENTION

### - Technical Problem

Recently, a urea SCR (Selective Catalytic Reduction) system that is an exhaust gas purifying apparatus has been proposed as an apparatus for purifying NOₓ in exhaust gases.

A urea SCR system purifies NOₓ by the following method. First, urea water is sprayed in an exhaust gas purifying apparatus equipped with an exhaust gas treating body supporting a catalyst (e.g., zeolite) thereon. Then, urea is thermally decomposed to generate ammonia. NOₓ is reduced with ammonia into N₂ through the action of the catalyst such as zeolite.

However, in a case where the conventional mat material disclosed in Patent Literature 1 is used as a holding sealing material in the urea SCR system, the surface pressure of the holding sealing material (pressure applied to the holding surface of the holding sealing material) is lowered over operating time of the urea SCR system. As a result, the holding force of the holding sealing material is problematically lowered.

The present invention has been devised to solve the above problem, and an aim thereof is to provide as use of a mat material having a holding force that is less likely to be lowered. The present invention also aims to provide an exhaust gas purifying apparatus equipped with the mat material as a holding sealing material.

The mat material of the present invention is suitably used as a holding sealing material in an exhaust gas purifying apparatus in a urea SCR system.

### - Solution to problem

The present inventors studied about what lowers the holding force in the case of using the conventional mat material disclosed in Patent Literature 1 as a holding sealing material in a urea SCR system.

The present inventors assumed that the glass fibers contained in the conventional mat material disclosed in Patent Literature 1 reacts with urea and alkaline components such as ammonia present in the urea SCR system to be deteriorated.

Based on the above studies, the present inventors found that the use of glass fibers having a specific composition can provide a mat material with a holding force that is less likely to be lowered, thus completing the present invention.

Specifically, the mat material is a mat material including glass fibers, the glass fibers containing 52 to 66% by weight of SiO₂, 9 to 26% by weight of Al₂O₃, 15 to 27% by weight of CaO, 0 to 9% by weight of MgO, 0 to 4% by weight of TiO₂, 0 to 5% by weight of ZnO, and 0 to 2% by weight of Na₂O and K₂O in total, and being substantially free of B₂O₃.

The mat material according to claim 1 is used as a holding sealing material in an exhaust gas purifying apparatus in a urea SCR system can prevent reduction in the holding force of the holding sealing material over operating time of the apparatus because the surface pressure of the holding sealing material is less likely to be lowered.

The reason for this is not clear. Presumably, the substantial absence of B₂O₃ in the glass fibers contained in the mat material have an effect of preventing reduction in the holding force.

In the mat material, the glass fibers preferably have an average fiber diameter of 9 to 15 µm.

The glass fibers having an average fiber diameter of 9 to 15 µm have sufficiently high strength and flexibility so as to give enhanced shear strength to a resulting holding sealing material.

The mat material preferably further contains an organic binder.

The mat material containing an organic binder, when used as a holding sealing material, can suppress bulkiness of the holding sealing material and enhance operability before assembly of the exhaust gas purifying apparatus.

The mat material preferably further contains an expansive agent.

In the mat material, the expansive agent preferably contains at least one material selected from the group consisting of vermiculite, bentonite, bronze mica, perlite, expandable graphite, and expandable fluoromica.

The mat material containing an expansive agent expands in a temperature range of 400°C to 800°C to have an enhanced holding force when used as a holding sealing material even in a high temperature range of exceeding 700°C where the strength of glass fibers is lowered.

According to the present invention, the mat material is used as a holding sealing material in an exhaust gas purifying apparatus including a casing, an exhaust gas treating body housed in the casing, and a holding sealing material wound around the exhaust gas treating body and provided between the exhaust gas treating body and the casing, wherein
the exhaust gas purifying apparatus functions as a urea SCR system.
As mentioned above, the mat material used as a holding sealing material in an exhaust gas purifying apparatus in a urea SCR system can prevent reduction in the holding force of the holding sealing material.

The exhaust gas purifying apparatus according to claim 6 includes: a casing; an exhaust gas treating body housed in the casing; and a holding sealing material wound around the exhaust gas treating body and provided between the exhaust gas treating body and the casing, wherein the holding sealing material is the mat material as described above and
the exhaust gas purifying apparatus functions as a urea SCR system.

In the exhaust gas purifying apparatus according to claim 7, the exhaust gas treating body is a catalyst supporting carrier or an exhaust gas filter.

### BRIEF DESCRIPTION OF DRAWINGS

Fig. 1 is a perspective view schematically showing an example of a mat material according to the first embodiment of the present invention.
Fig. 2 is a flowchart showing an example of a method of producing the mat material according to the first embodiment of the present invention.
Fig. 3 is a flowchart showing another example of a method of producing the mat material according to the first embodiment of the present invention.
Fig. 4 is a schematic cross-sectional view of an example of an exhaust gas purifying apparatus according to the first embodiment of the present invention.
Fig. 5 is a perspective view schematically showing an example of an exhaust gas treating body included in the exhaust gas purifying apparatus according to the first embodiment of the present invention.
Fig. 6 is a perspective view schematically showing an example of a method of producing the exhaust gas purifying apparatus according to the first embodiment of the present invention.
Fig. 7 is a schematic cross-sectional view of another example of the exhaust gas purifying apparatus according to the first embodiment of the present invention.
Fig. 8 is a graph showing surface pressure values and the reduction rate of the surface pressure in Example 1 and Comparative Example 1.

### DESCRIPTION OF EMBODIMENTS

Hereafter, the present invention is specifically described. The present invention, however, is not limited by the following description, and appropriate changes may be made without departing from the scope of the present invention.

### (First Embodiment)

Hereafter, the first embodiment of the present invention is described with reference to drawings.

### (Mat material)

First, a mat material according to the first embodiment is described.

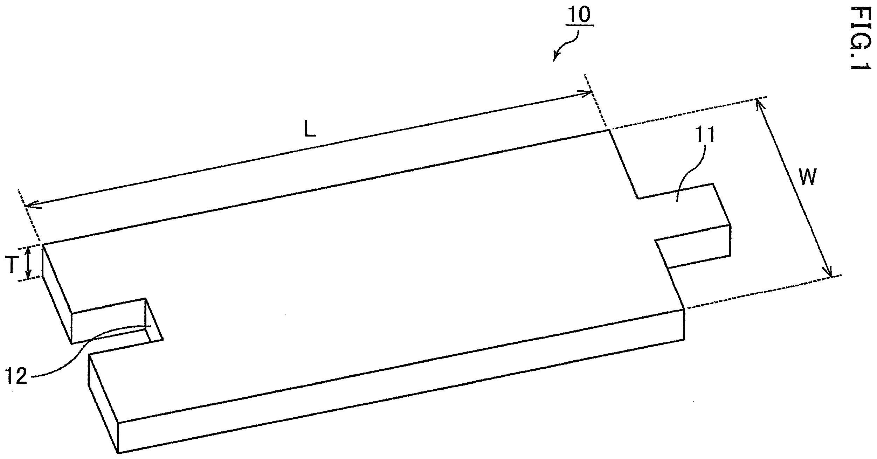

Fig. 1 is a perspective view schematically showing an example of a mat material according to the first embodiment.

As shown in Fig. 1, a mat material 10 according to the first embodiment is a platelike body having a substantially rectangular shape in a plan view with a predetermined length (indicated by arrow L in Fig. 1), width (indicated by arrow W in Fig. 1), and thickness (indicated by arrow T in Fig. 1).

The mat material 10 shown in Fig. 1 has two longitudinal end portions. One end portion has a projected portion 11 and the other end portion has a recessed portion 12. The projected portion 11 and the recessed portion 12 of the mat material 10 are formed to fit each other when the mat material 10 is wound around an exhaust gas treating body for assembly of an exhaust gas purifying apparatus described later.

The mat material according to the first embodiment of the present invention contains glass fibers. Such a mat material can be produced by entangling glass fibers.

The glass fibers contain 52 to 66% by weight of SiO₂, 9 to 26% by weight of Al₂O₃, 15 to 27% by weight of CaO, 0 to 9% by weight of MgO, 0 to 4% by weight of TiO₂, 0 to 5% by weight of ZnO, and 0 to 2% by weight of Na₂O and K₂O in total, and are substantially free of B₂O₃.

The phrase "substantially free of B₂O₃" as used herein refers to a state where the B₂O₃ content in the glass fibers measured by ICP mass spectrometry is less than 1% by weight.

Here, Na₂O and K₂O may be contained in glass fibers in an amount of 0 to 2% by weight in total. Accordingly, glass fibers may contain both of Na₂O and K₂O, one of Na₂O and K₂O, or none of Na₂O and K₂O.

In the mat material according to the first embodiment, the composition of the glass fibers is not limited as long as it is within the scope of the above numerical range.

For example, the glass fibers may contain 52 to 62% by weight of SiO₂, or more than 62% by weight (i.e., 62.1 to 66% by weight) of SiO₂.

The glass fibers may contain 9 to 17% by weight of Al₂O₃, or more than 17% by weight (i.e., 17.1 to 26% by weight) of Al₂O₃.

The glass fibers may contain 17 to 27% by weight of CaO, or less than 17% by weight (i.e., 15 to 16.9% by weight) of CaO.

Moreover, the glass fibers may be substantially free of at least one of MgO, TiO₂, and ZnO. The phrase "substantially free of MgO" refers to a state where the MgO content in the glass fibers measured by ICP mass spectrometry is less than 1% by weight. The same shall apply to the cases of TiO₂ and ZnO. The amount of Na₂O and K₂O in total in the glass fibers measured by ICP mass spectrometry may be less than 1% by weight.

As mentioned above, MgO, TiO₂, ZnO, Na₂O, and K₂O are optional components.

In the mat material according to the first embodiment, the glass fibers substantially include the above components and may further contain other component(s) in an amount of at most 5% by weight in total.

The other component(s) is/are not particularly limited, and examples thereof include SrO, BaO, SnO, ZrO₂, Fe₂O₃, CeO₂, and SO₃.

In the mat material according to the first embodiment, the total amount of respective components including the other component(s) in the glass fibers is set to 100% by weight.

Specific examples of the glass fibers contained in the mat material according to the first embodiment include Advantex glass manufactured by Owens Corning Corporation.

The mat material according to the first embodiment may further contain, in addition to the glass fibers, a binder such as an organic binder.

The mat material containing a binder such as an organic binder can, when used as a holding sealing material, suppress bulkiness of the holding sealing material and enhance the operability before assembly of the exhaust gas purifying apparatus.

Examples of the organic binder include epoxy resins, acrylic resins, rubber resins, and styrene resins.

The amount of the organic binder (weight of the organic binder relative to the total weight of the mat material) is preferably at most 20% by weight, more preferably in a range of 0.5 to 10% by weight, and still more preferably in a range of 0.5 to 2.0% by weight.

It is to be noted that the organic binder contained in a mat material may be a cause of increasing the amount of organic matters discharged from an exhaust gas treating apparatus equipped with such a mat material. Accordingly, the amount of the organic binder is preferably as small as possible. Moreover, the organic binder may be not at all contained in the mat material.

The binder may be applied to the mat material, for example, by a method of spraying a predetermined amount of a binder solution to the mat material so that the binder is adhered to the mat material, or by a method of impregnating a mat material with a binder solution.

The binder solution may be an emulsion prepared by dispersing an organic binder such as acrylic resins in water. The binder solution may appropriately contain an inorganic binder such as alumina sol.

The mat material according to the first embodiment may further contain an expansive agent. The expansive agent preferably expands in a temperature range of 400°C to 800°C.

The mat material containing an expansive agent expands in a temperature range of 400°C to 800°C, and therefore can enhance the holding force when used as a holding sealing material even in a high temperature range exceeding 700°C where the strength of glass fibers is lowered.

Examples of the expansive agent include vermiculite, bentonite, bronze mica, perlite, expandable graphite, and expandable fluoromica. Each of these expansive agents may be used alone, or two or more of these may be used in combination.

The amount of the expansive agent is not particularly limited, and is preferably 5 to 50% by weight and more preferably 10 to 30% by weight relative to the total weight of the mat material.

### (Method of producing mat material)

A description is given on an exemplary method of producing the mat material according to the first embodiment (hereafter, also referred to as a first method of producing the mat material).

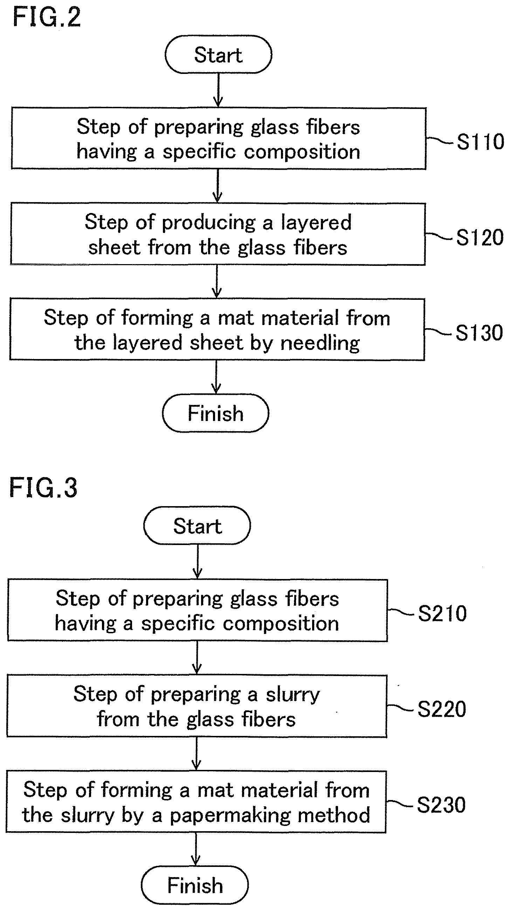

Fig. 2 is a flowchart showing an example of a method of producing the mat material according to the first embodiment.

The first method of producing the mat material according to the first embodiment includes:
(A) Step S110 of preparing glass fibers having the above-described composition;
(B) Step S120 of producing a layered sheet from the glass fibers; and
(C) Step S130 of forming a mat material from the layered sheet by needling.

In the first method of producing the mat material, the mat material is produced by so-called "needling". The "needling" is a generic name for methods of producing a mat material by inserting/drawing needles into/from a layered sheet containing inorganic fibers.

Hereafter, each step is specifically described.

### (Step S110)

In Step S110, glass fibers having the above-mentioned composition are prepared.

The fiber diameter of the glass fibers is not particularly limited. The glass fibers have an average fiber diameter of preferably 9 to 15 µm (e.g., 11 µm), and more preferably 9 to 13 µm.

Having an average fiber diameter of 9 to 15 µm, the glass fibers have sufficiently high strength and flexibility to give enhanced shear strength to a resulting holding sealing material.

Here, "the average fiber diameter of fibers" refers to a value obtained by measuring the diameter of randomly selected 300 fibers by a SEM (scanning electron microscope) and averaging the measured diameters.

### (Step S120)

In Step S120, the glass fibers obtained in Step S110 were subjected to opening treatment to form a cotton-like layered sheet.

The opening treatment can be performed, for example by carding. In the carding treatment, a nonwoven fabric called web is formed and a number of this nonwoven fabric is laminated to form a layered sheet.

### (Step S130)

In Step S130, a mat material is produced from the layered sheet by needling.

In the needling treatment, a needling apparatus may be used.

A needling apparatus includes a needle board that reciprocates in the piercing direction (commonly, perpendicular direction) and a pair of supporting plates provided on the both sides (top face and rear face) of the layered sheet. The needle board has a large number of needles for needling a layered sheet, for example, at a density of about 25 to 5000 pcs/100 cm². Each supporting plate has a large number of through holes for needles. Accordingly, a layered sheet is sandwiched by the pair of supporting plates, and the needle board is brought near to and apart from the layered sheet to have needles inserted into and drawn from the layered sheet. In this manner, a mat material in which glass fibers are entangled is formed.

A needling apparatus having a different configuration may include two needle boards. Each needle board has its supporting plate. The two needle boards are placed on the top face and rear face of the layered sheet, and the supporting plates immobilizes the layered sheet. Here, needles on one needle board are positioned in such a manner that they are not overlapped with the needles provided on the other needle board during the needling treatment. Each supporting plate has a large number of through holes at positions corresponding to the positions of needles on both needle boards to avoid a contact between needles and the supporting plate during the needling treatment performed from both faces of the layered sheet. Using such a needling apparatus, a layered sheet may be sandwiched by two supporting plates to be subjected to the needling treatment performed by two needle boards from both faces. The needling treatment performed by the above method can shorten the treatment time.

Next, the glass fibers are subjected to heat treatment.

The temperature during the heat treatment is preferably in a range of 600°C to 800°C (e.g., 700°C). The time for the heat treatment is preferably in a range of 10 minutes to 24 hours (e.g., 20 minutes).

Finally, the obtained mat material is cut into a predetermined shape (e.g. the shape shown in Fig. 1), and thus, the mat material according to the first embodiment is produced.

Next, another method of producing the mat material according to the first embodiment (hereafter, also referred to as a second method of producing the mat material) is described.

Fig. 3 is a flowchart showing another example of the method of producing the mat material according to the first embodiment.

The second method of producing the mat material according to the first embodiment includes:
(A) Step S210 of preparing glass fibers having the above composition;
(B) Step S220 of preparing a slurry from the glass fibers; and
(C) Step S230 of forming a mat material from the slurry by a papermaking method.

In the second method of producing the mat material, a so-called "papermaking method" is employed for producing a mat material. The "papermaking method" is a generic name for methods of producing mat materials by introducing an inorganic fiber slurry into a papermaking mold and then performing suction dehydration.

Hereafter, each step is specifically described.

### (Step S210)

The description on Step S210 is omitted because Step S210 is substantially equal to Step S110 in the first method of producing the mat material.

The fiber diameter of glass fibers is not particularly limited. The glass fiber has an average fiber diameter of, in the same manner as in the first method, preferably in a range of 9 to 15 µm (e.g., 11 µm), and more preferably in a range of 9 to 13 µm.

### (Step S220)

In Step S220, a slurry is prepared from the glass fibers obtained in Step S210 by the following method.

First, glass fibers and an organic binder each in a predetermined amount are added to water and mixed. At this time, an inorganic binder and/or a flocculant may be further added. The above-mentioned expanding material may be added.

Examples of the inorganic binder include an alumina sol and a silica sol.

The organic binder to be used may be a latex or the like. The amount of the organic binder is preferably at most 20% by weight. In a case where the amount of the organic binder is more than 20% by weight, the amount of organic matters discharged from the exhaust gas treatment apparatus significantly increases.

Next, the resulting mixture is stirred in a mixer such as a papermaking device to prepare an opened inorganic fiber slurry. Stirring is commonly performed for preferably 20 seconds to 120 seconds.

### (Step S230)

In Step S230, a mat material is produced from the resulting slurry by the papermaking method.

First, the slurry is introduced into, for example, a molding device having fine pores in the bottom. Then, for example, dehydration is performed in such a manner that moisture is suctioned from the bottom of the molding device using a suction unit, thereby preparing a raw mat in a predetermined shape.

Next, the raw mat is compressed by a presser and then heated and dried at a predetermined temperature to give a mat material.

The heating/drying treatment is preferably performed on the raw mat placed in a heating machine such as an oven at 90°C to 180°C for 5 to 60 minutes.

The mat material according to the first embodiment is produced through these steps.

### (Exhaust gas purifying apparatus)

According to the present invention, the mat material according to the first embodiment is used as a holding sealing material in an exhaust gas purifying apparatus as a holding sealing material in a urea SCR system.

Hereafter, the description is given on the exhaust gas purifying apparatus according to the first embodiment of the present invention.

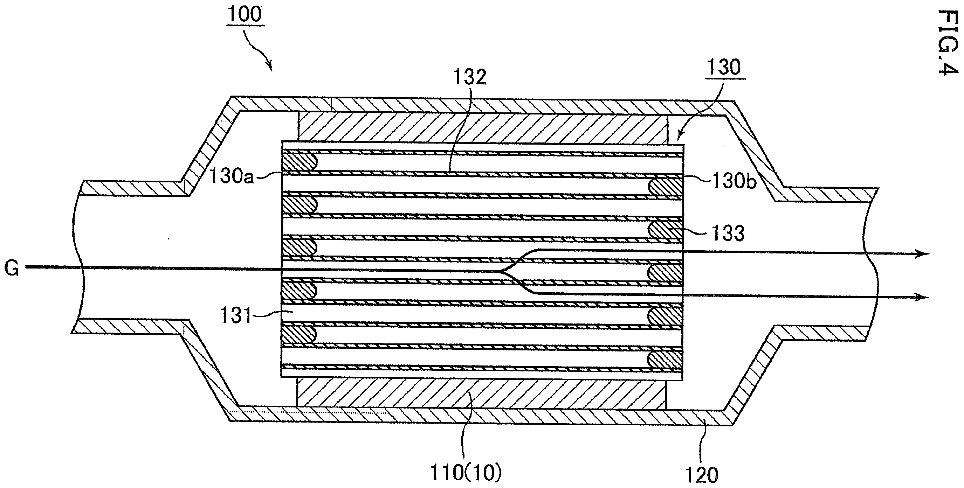

Fig. 4 is a schematic cross-sectional view of an example of the exhaust gas purifying apparatus according to the first embodiment of the present invention.

As shown in Fig. 4, an exhaust gas purifying apparatus 100 according to the first embodiment of the present invention includes a pillar-shaped exhaust gas treating body 130 in which a large number of cells 131 are disposed in the longitudinal direction with cell walls 132 therebetween, a casing 120 for housing the exhaust gas treating body 130, and a holding sealing material 110 that is disposed between the exhaust gas treating body 130 and the casing 120 for holding the exhaust gas treating body 130.

To the end portion of the casing 120, an inlet pipe for introducing exhaust gases discharged from the internal combustion engine and an outlet pipe for discharging the exhaust gases having passed through the exhaust gas purifying apparatus to the outside may be connected as needed.

In the exhaust gas purifying apparatus 100 shown in Fig. 4, the exhaust gas treating body 130 is an exhaust gas filter (honeycomb filter) in which either one end of each cell is sealed by a plug 133.

In the exhaust gas purifying apparatus 100 shown in Fig. 4, the holding sealing material 110 is the mat material 10 shown in Fig. 1.

Passage of exhaust gases through the exhaust gas purifying apparatus 100 having the above configuration is described below with reference to Fig. 4.

As shown in Fig. 4, when exhaust gases discharged from the internal combustion engine reach the exhaust gas purifying apparatus 100 (in Fig. 4, exhaust gases are indicated by G, and the flow of the exhaust gases is indicated by the arrows), the gases flow into the cells 131 which are open at the end on the exhaust gas inlet side 130a, and pass through the cell walls 132 separating the cells 131. At this time, PMs in the exhaust gases are collected by the cell walls 132 so that the exhaust gases are purified. The purified exhaust gases are discharged from other cells 131 opened at the end on the exhaust gas outlet side 130b to the outside.

Next, the description is given on the exhaust gas treating body (honeycomb filter) and the casing included in the exhaust gas purifying apparatus according to the first embodiment of the present invention.

The description on the holding sealing material included in the exhaust gas purifying apparatus is omitted because it has been already described as the mat material according to the first embodiment of the present invention.

The exhaust gas treating body included in the exhaust gas purifying apparatus is now described.

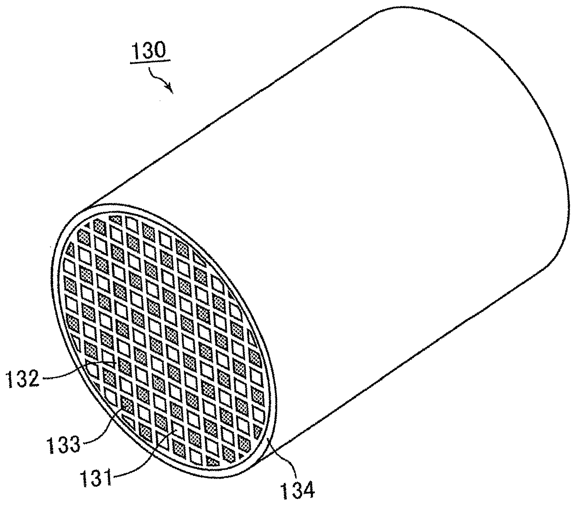

Fig. 5 is a perspective view schematically showing an example of the exhaust gas treating body included in the exhaust gas purifying apparatus according to the first embodiment of the present invention.

As shown in Fig. 5, the exhaust gas treating body (honeycomb filter) 130 is mainly made of a porous ceramic material and has a substantially cylindrical shape. The honeycomb filter 130 is peripherally provided with a peripheral coat layer 134 so that the peripheral portion of the honeycomb filter 130 is reinforced, that the shape of the peripheral portion is arranged, and that the heat insulation of the honeycomb filter 130 is increased.

The internal configuration of the honeycomb filter 130 is as same as that described in the description of the exhaust gas purifying apparatus according to the first embodiment of the present invention (see Fig. 4).

Next, the casing included in the exhaust gas purifying apparatus is described.

The casing is mainly made of a metal such as stainless steel, and the shape thereof may be a substantially cylindrical shape with smaller inner diameters at both ends than the inner diameter at the center potion as shown in Fig. 4, or a substantially cylindrical shape with a constant inner diameter.

The inner diameter of the casing (inner diameter of the portion for housing the exhaust gas treating body) is preferably slightly smaller than the total length of the diameter of the end face of the exhaust gas treating body and the thickness of the holding sealing material (mat material) in the state of being wound around the exhaust gas treating body.

Next, the method of producing the exhaust gas purifying apparatus according to the first embodiment of the present invention is described.

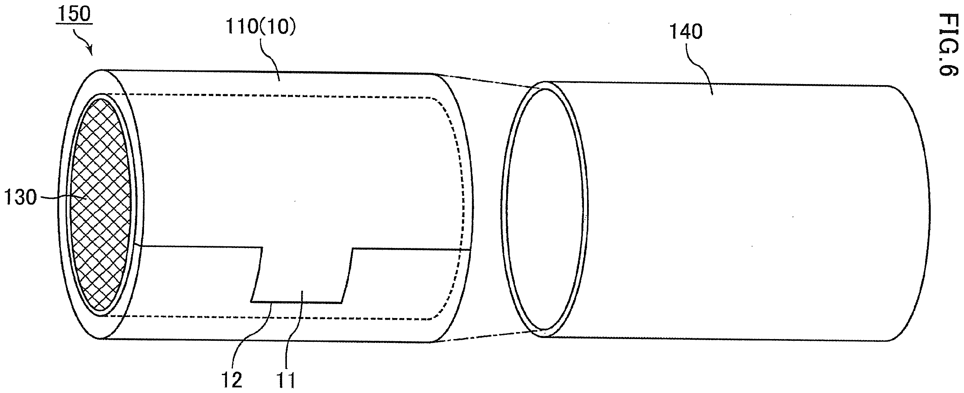

Fig. 6 is a perspective view schematically showing an example of the method of producing the exhaust gas purifying apparatus according to the first embodiment of the present invention. Fig. 6 shows an example where the used casing has a substantially cylindrical shape with a constant inner diameter.

First, the winding step is performed, in which the mat material 10 shown in Fig. 1 is wound around the exhaust gas treating body (honeycomb filter) 130 to provide a wound body (the exhaust gas treating body with the holding sealing material wound therearound) 150.

In the winding step, the mat material 10 is wound around the substantially cylindrical exhaust gas treating body 130 produced by a conventionally known method, in such a manner that the projected portion 11 fits the recessed portion 12.

In this manner, the wound body 150 that is the exhaust gas treating body 130 with the holding sealing material 110 wound therearound is produced.

Next, the housing step is performed, in which the produced wound body 150 is housed in the casing 140 that has a substantially cylindrical shape of a predetermined size and is mainly made of a metal and the like.

For exerting a predetermined repulsive power (i.e., power to hold the exhaust gas treating body) by compression of the holding sealing material after housing, the casing 140 has an inner diameter slightly smaller than the maximum outer diameter of the exhaust gas treating body 130 with the holding sealing material 110 wound therearound (including the thickness of the holding sealing material 110).

Thus, the exhaust gas purifying apparatus according to the first embodiment of the present invention can be produced.

In the housing step, the wound body is housed in the casing by a method such as the stuffing method, sizing (swaging) method, or clam shell method.

In the stuffing method, a stuffing jig is used for stuffing the wound body to a predetermined position inside the casing. In the sizing (swaging) method, the wound body is inserted into the casing, and then the casing was compressed from the outer peripheral side in such a manner that the inner diameter of the casing is reduced. In the clam shell method, the casing is configured to be dividable into two parts (first casing, second casing), and the wound body is set on the first casing and sealed with the second casing placed thereon.

Among the methods for housing the wound body in the casing, preferred is the stuffing method or the sizing (swaging) method. In the stuffing or sizing (swaging) method, the number of production steps can be reduced because the casing is not configured by two parts.

Next, a urea SCR system is described as another example of the exhaust gas purifying apparatus according to the first embodiment of the present invention.

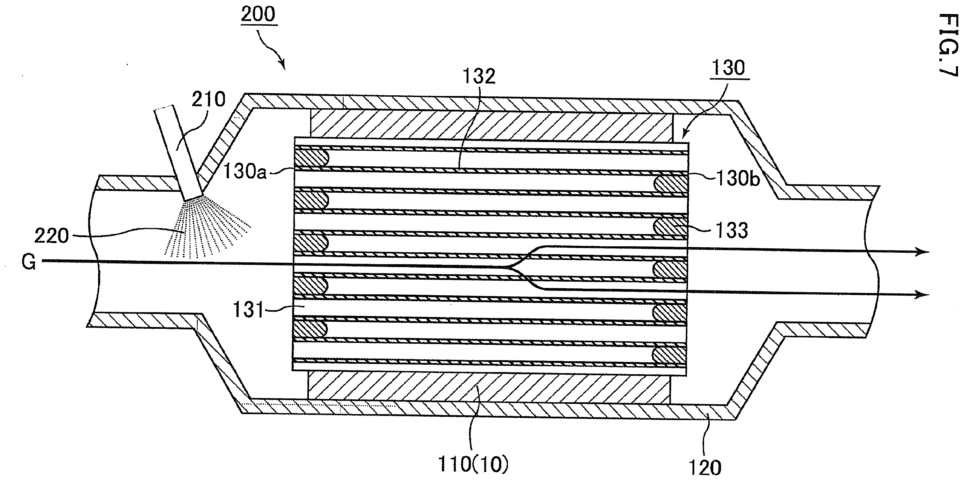

Fig. 7 is a schematic cross-sectional view of another example of the exhaust gas purifying apparatus according to the first embodiment of the present invention.

A urea SCR system 200 shown in Fig. 7 has a similar configuration as that of the exhaust gas purifying apparatus 100 shown in Fig. 4, except that the urea SCR system 200 has a urea spray port 210.

In the urea SCR system 200, the urea spray port 210 is provided at the front section (the upstream side of the exhaust gases G) where the exhaust gases G flow into the exhaust gas treating body 130, and sprays urea water 220.

A method of purifying exhaust gases using the urea SCR system 200 is described below with reference to Fig. 7.

The description on the method of collecting PM in exhaust gases is omitted because it is similar to the case where the exhaust gas purifying apparatus 100 in Fig. 4 is used.

Next, a method of purifying NOₓ in exhaust gases is described.

In the urea SCR system 200, the urea water 220 is sprayed over the exhaust gas treating body (honeycomb filter) 130. Then, urea contained in the urea water 220 is decomposed by heat of the exhaust gases to generate ammonia (not shown).

The ammonia passes through the exhaust gas treating body 130 together with the exhaust gases G introduced in the urea SCR system 200. The ammonia and NOₓ in the exhaust gases pass through the cell walls 132 supporting a catalyst such as zeolite to be reduced into N₂ through the action of the catalyst such as zeolite. As a result, NOₓ is purified.

Then, the exhaust gases G in which NOₓ has been purified are discharged from the urea SCR system 200.

The urea SCR system can be produced by a method similar to the method of producing the exhaust gas purifying apparatus, except that a urea spray port is provided at the front section (the upstream side of the exhaust gases G) where the exhaust gases flow into the honeycomb filter.

In the following, the effects of the use of the mat material and
the exhaust gas purifying apparatus according to the first embodiment of the present invention are listed.
(1) When the mat material is used as a holding sealing material in an exhaust gas purifying apparatus that functions as a urea SCR system, the surface pressure of the holding sealing material is less likely to be lowered over operating time thereof, preventing reduction in the holding force of the holding sealing material.
   The reason for this is not clear, but is presumably that the mat material of the present embodiment contains glass fibers substantially free of B₂O₃.
(2) In the exhaust gas purifying apparatus of the present embodiment, the mat material is used as a holding sealing material in the exhaust gas purifying apparatus in the urea SCR system, to prevent reduction in the holding force of the holding sealing material.

### EXAMPLES

In the following, the first embodiment of the present invention is more specifically described based on examples. It is to be noted that the present invention is not limited only to these examples.

### (Production of mat material)

### (Example 1)

First, glass fibers (Advantex glass manufactured by Owens Corning Japan LLC., average fiber length: 6 mm, average fiber diameter: 12 µm) were prepared.

The glass fibers were used after heating at 740°C for 10 minutes.

Next, the glass fibers (134.7 g) were added to water (60 L) and stirred at 60 Hz for 30 minutes. To the stirred water containing glass fibers, a latex (LX852 manufactured by ZEON CORPORATION, 15.0 g) was added, and the resulting mixture was stirred at 60 Hz for 1 minute. Next, an alumina sol (AL520 manufactured by Nissan Chemical Industries, Ltd., 5.4 g) was added thereto and stirred at 60 Hz for 1 minute. Moreover, a 0.5% by weight aqueous solution of nonionic polyacrylamide (Percol 47 manufactured by Allied Colloids) (269.3 g) was added as a polymer flocculant, and stirred at 60 Hz for 1 minute.

In this manner, a slurry was prepared.

A 335 mm x 335 mm TAPPI papermaking machine was used for papermaking of the slurry, thereby preparing a raw mat having a weight per unit area of 1200 g/m².

A press dryer was used for drying the raw mat in a state compressed to a thickness of 4.8 mm, at 150°C for 15 minutes, thereby producing a mat material of Example 1.

### (Comparative Example 1)

A mat material of Comparative Example 1 was produced in the same manner as in Example 1.

In Comparative Example 1, however, the used glass fibers were E-glass (Owens Corning Japan LLC., average fiber length: 6 mm, average fiber diameter: 12 µm).

The glass fibers used in Comparative Example 1 have a nominal composition of 52 to 62% by weight of SiO₂, 12 to 16% by weight of Al₂O₃, 16 to 25% by weight of CaO, 0 to 5% by weight of MgO, 5 to 10% by weight of B₂O₃, 0 to 1.5% by weight of TiO₂, and 0 to 2% by weight of Na₂O and K₂O in total.

### (Alkali resistance test)

For evaluation of the holding force of the mat material used as a holding sealing material in a urea SCR system, an alkali resistance test was performed on the mat materials of Example 1 and Comparative Example 1.

First, the mat material of Example 1 was punched using a Thomson blade having a diameter of 50 mm to give a sample (hereafter, referred to as a sample of Example 1).

Similarly, the mat material of Comparative Example 1 was punched to give a sample (hereafter referred to as a sample of Comparative Example 1).

The samples of Example 1 and Comparative Example 1 were each impregnated with 30 mL of water for 18 hours.

Other samples of Example 1 and Comparative Example 1 were each impregnated with 30 mL of a urea aqueous solution (AdBlue (registered trademark)) for 18 hours.

Each sample was dried in a dryer adjusted to 105°C for 2 hours. Then, each sample was fired in an electric furnace adjusted to 400°C for 2 hours.

The surface pressure of each sample was measured by the following method.

The surface pressure was measured using a hot surface pressure measuring apparatus manufactured by M.T.S. Co., Ltd.

First, each sample at an ambient temperature was compressed to a gap bulk density (GBD) of 0.4 g/cm³ and maintained in that state for 5 minutes.

The gap bulk density of the sample is calculated using the equation: Gap bulk density = Weight of sample/(Area of sample × Thickness of sample).

The sample in a compressed state was heated to 500°C at a rate of 50°C/min and was released to the gap bulk density of 0.364 g/cm³.

The sample was maintained at a temperature of 500°C and a gap bulk density of 0.364 g/cm³ for 5 minutes.

Then, the sample was compressed to a gap bulk density of 0.4 g/cm³ at a rate of 1 inch (25.4 mm)/min, and the load to the sample in that state was measured.

The load was divided by the area of the sample to determine the surface pressure (kPa).

In Example 1, the sample impregnated with water had a surface pressure of 271.3 kPa and the sample impregnated with a urea aqueous solution had a surface pressure of 254.6 kPa.

In Comparative Example 1, the sample impregnated with water had a surface pressure of 306.0 kPa and the sample impregnated with a urea aqueous solution had a surface pressure of 283.1 kPa.

In Example 1 and Comparative Example 1, the ratio of the surface pressure of the sample impregnated with a urea aqueous solution to the sample impregnated with water was calculated to determine the reduction rate (%) of the surface pressure.

The reduction rate of the surface pressure in Example 1 was 6.1% and that in Comparative Example 1 was 7.5%.

Table 1 shows the surface pressure and the reduction rate of the surface pressure of each sample in Example 1 and Comparative Example 1.

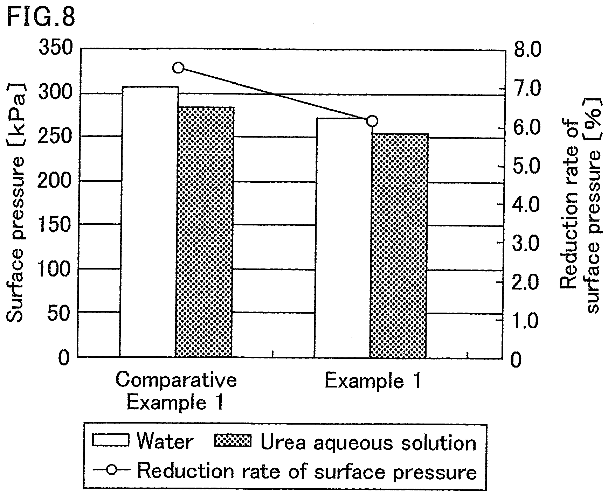

Fig. 8 shows a graph showing the surface pressure and the reduction rate of the surface pressure in Example 1 and Comparative Example 1.

**[Table 1]**

| | Glass fiber | Surface pressure [kPa] | | Reduction rate of surface pressure [%] |
|---|---|---|---|---|
| | | Water | Urea aqueous solution | |
| Example 1 | Advantex glass | 271.3 | 254.6 | 6.1 |
| Comparative Example 1 | E-glass | 306.0 | 283.1 | 7.5 |

As shown in Table 1 and Fig. 8, though the surface pressure values in Comparative Example 1 are larger than those in Example 1, the reduction rate of the surface pressure is larger in Comparative Example 1 than in Example 1.

Accordingly, if the mat material of Comparative Example 1 is used as a holding sealing material in an exhaust gas purifying apparatus, especially in a urea SCR system, the holding force of the holding sealing material is presumably significantly lowered over operating time of the apparatus.

In contrast, if the mat material of Example 1 is used as a holding sealing material in an exhaust gas purifying apparatus, especially in a urea SCR system, the holding force of the holding sealing material is not so much lowered over operating time of the apparatus.

The above results show that the use of a mat material containing glass fibers substantially free of B₂O₃ as a holding sealing material in an exhaust gas purifying apparatus, especially in a urea SCR system, is less likely to allow reduction in the surface pressure of the holding sealing material over operating time of the apparatus, presumably leading to prevention of reduction in the holding force of the holding sealing material.

### (Other embodiments)

The mat material may further contain, in addition to the glass fibers described in the first embodiment, inorganic fibers such as alumina fibers and silica fibers.

It is to be noted that the mat material preferably contains the glass fibers described in the first embodiment in an amount of at least 50% by weight of the sum of all the fibers contained in the mat material. Moreover, the mat material preferably contains only the glass fibers described in the first embodiment.

The average fiber length of the glass fibers contained in the mat material is not particularly limited, and is preferably 30 µm to 120 mm, and more preferably 0.1 mm to 100 mm.

If the average fiber length of the glass fibers is less than 30 µm, the fiber length of the glass fibers is too short and such glass fibers are insufficiently entangled with each other. In such a case, the shear strength of the resulting mat material used as a holding sealing material is poor. If the average fiber length of the glass fibers is more than 120 mm, the fiber length of the glass fibers is too long. In such a case, the workability of the glass fibers in production of a holding sealing material is poor. Consequently, the resulting holding sealing material is difficult to be wound around the exhaust gas treating body, leading to easy cracking thereof.

The "average fiber length of fibers" refers to the average of the lengths of 100 fibers selected randomly.

The shapes of the recessed portion and projected portion formed at ends of the mat material are not particularly limited, as long as they fit each other. In a case where a set of a recessed portion and a projected portion is formed, preferably formed are a projected portion projecting in the size of 10 mm (width) × 10 mm (length) to 300 mm (width) × 100 mm (length) at a part of one end portion and a recessed portion having a shape corresponding to the projected portion at a part of the other end portion.

In a case where an exhaust gas purifying apparatus is produced using a mat material with such a recessed portion and a projected portion as a holding sealing material, the holding sealing material can surely hold an exhaust gas treating body, which means excellent handleability of the exhaust gas purifying apparatus.

If the size of the projected portion is smaller than 10 mm (width) × 10 mm (length) or larger than 300 mm (width) × 100 mm (length), such a mat material wound around the exhaust gas treating body has a smaller contact area between the end portions of the mat material, so that the end portions of the mat material are less likely to be attached to each other. As a result, the holding sealing material is less likely to hold the exhaust gas treating body.

In the mat material, plural recessed portions and projected portions to be fitted to each other may be formed at the end portions of the mat material. Alternatively, no recessed portion or projected portion is formed at the end portions of the mat material.

The "substantially rectangular shape in a plan view" mentioned in the description on the mat material according to the first embodiment covers a concept that includes a projected portion and a recessed portion as shown in Fig. 1. Moreover, the "substantially rectangular shape in a plan view" includes a shape of a mat material having an edge portion with an angle of other than 90°. For example, an edge portion of the mat material may have an acute or obtuse angle or a curvature.

The weight per unit area of the mat material is not particularly limited, and is preferably 200 to 5000 g/m², and more preferably 1000 to 3000 g/m². If the weight per unit area of the mat material is less than 200 g/m², the holding force as the holding sealing material is not enough. If the weight per unit area of the mat material is more than 5000 g/m², the bulk of the mat material is less likely to be reduced. If such a mat material is used as a holding sealing material in production of an exhaust gas purifying apparatus, an exhaust gas treating body may be easily dropped from the casing.

The gap bulk density of the mat material (gap bulk density of the holding sealing material prior to stuffing of the wound body into the casing) is not particularly limited, and is preferably 0.10 to 0.30 g/cm³. If the gap bulk density of the mat material is less than 0.10 g/cm³, the fibers are less entangled with each other. In such a case, the fibers are easily removed, so that the mat material is less likely to maintain the predetermined shape. If the gap bulk density of the mat material is more than 0.30 g/cm³, the mat material becomes hard. Such a mat material tends to be cracked because it is difficult to be wound around the exhaust gas treating body.

The thickness of the mat material is not particularly limited, and is preferably 2 to 50 mm and is more preferably 6 to 20 mm.

If the thickness of the mat material is less than 2 mm, the holding force as the holding sealing material is not enough. If such a mat material is used as a holding sealing material in production of an exhaust gas purifying apparatus, an exhaust gas treating body may be easily dropped from a casing. If the thickness of the mat material is more than 50 mm, the mat material is too thick. Such a mat material is difficult to be wound around the exhaust gas treating body, leading to east cracking thereof.

In a case where the mat material is used as a holding sealing material in an exhaust gas purifying apparatus, the number of holding sealing materials included in the exhaust gas purifying apparatus is not particularly limited. A single holding sealing material may be used, or plural holding sealing materials combined with each other may be used.

A method of combining plural holding sealing materials is not particularly limited. For example, plural holding sealing material may be sewed on a sewing machine, or bonded to each other with an adhesive tape or an adhesive agent.

In the mat material, the organic binder used in production of the mat material is not limited to an acrylic resin, and may be a rubber such as acrylic rubber, a water-soluble organic polymer such as carboxymethyl cellulose or polyvinyl alcohol, a thermoplastic resin such as styrene resin, or a thermosetting resin such as epoxy resin. Among these, particularly preferred are acrylic rubber, acrylonitrile-polybutadiene rubber, and styrene-polybutadiene rubber.

In the mat material, the emulsion (binder solution) used in production of the mat material may contain plural kinds of organic binders mentioned above.

Examples of the binder solution include, in addition to an above-mentioned latex containing an organic binder dispersed in water, a solution containing an above-mentioned organic binder dissolved in water or an organic solvent.

In the mat material, the emulsion (binder solution) used in production of the mat material may further contain an inorganic binder.

In a case where the binder solution contains an inorganic binder, examples of the inorganic binder include an alumina sol and a silica sol.

The material of the casing included in the exhaust gas purifying apparatus according to an embodiment of the present invention is not particularly limited as long as it is a heat-resistant metal. Specific examples thereof include metals such as stainless steel, aluminum, and iron.

Preferable examples of the shape of the casing included in the exhaust gas purifying apparatus according to an embodiment of the present invention include, in addition to the substantially cylindrical shape, shapes of clamshell-type and downsizing-type.

The shape of the exhaust gas treating body included in the exhaust gas purifying apparatus according to an embodiment of the present invention is not particularly limited, as long as it is a pillar shape. The exhaust gas treating body may have any shape in any size, other than the substantially cylindrical shape, such as a substantially elliptic cylinder shape and a substantially rectangular column shape.

The exhaust gas treating body included in the exhaust gas purifying apparatus according to an embodiment of the present invention may be an integral honeycomb structured body that is integrally formed of cordierite or the like as shown in Fig. 5 or an aggregated honeycomb structured body including plural cylindrical honeycomb fired bodies made of silicon carbide or the like, wherein the plural cylindrical honeycomb fired bodies are bonded to each other via an adhesive layer mainly containing a ceramic material and each include a large number of through holes disposed in parallel in the longitudinal direction with partition walls therebetween.

The exhaust gas treating body included in the exhaust gas purifying apparatus according to an embodiment of the present invention may support a catalyst.

Examples of the catalyst supported on the exhaust gas treating body include: noble metals such as platinum, palladium, and rhodium; alkaline metals such as potassium and sodium; alkaline earth metals such as barium; and metal oxides such as cerium oxide. Each of these catalysts may be used alone, or two or more of these may be used in combination.

In the exhaust gas purifying apparatus according to an embodiment of the present invention, if the exhaust gas treating body is a honeycomb structured body, cells therein may have the end portions not sealed with plugs. In such a case, the exhaust gas treating body functions as a catalyst supporting carrier that supports a catalyst such as platinum and purifies harmful gas components such as CO, HC, and NOₓ contained in exhaust gases.

In the mat material, it is essential that the mat material contains glass fibers, the glass fibers containing 52 to 66% by weight of SiO₂, 9 to 26% by weight of Al₂O₃, 15 to 27% by weight of CaO, 0 to 9% by weight of MgO, 0 to 4% by weight of TiO₂, 0 to 5% by weight of ZnO, and 0 to 2% by weight of Na₂O and K₂O in total and being substantially free of B₂O₃. In the exhaust gas purifying apparatus of the present invention, it is essential that the mat material is used as a holding sealing material.

Desired effects can be obtained by appropriately combining such essential features with various features (e.g., composition of glass fibers, shape of mat material, method of producing mat material) described in the first embodiment and other embodiments.

### REFERENCE SIGNS LIST

- 10: Mat material
- 100: Exhaust gas purifying apparatus
- 110: Holding sealing material
- 120, 140: Casing
- 130: Exhaust gas treating body
- 200: Urea SCR system

## Claims

1. Use of a mat material comprising glass fibers,
the glass fibers containing 52 to 66% by weight of SiO₂, 9 to 26% by weight of Al₂O₃, 15 to 27% by weight of CaO, 0 to 9% by weight of MgO, 0 to 4% by weight of TiO₂, 0 to 5% by weight of ZnO, and 0 to 2% by weight of Na₂O and K₂O in total, and being substantially free of B₂O₃,
as a holding sealing material in an exhaust gas purifying apparatus including a casing, an exhaust gas treating body housed in the casing, and the holding sealing material wound around the exhaust gas treating body and provided between the exhaust gas treating body and the casing, and
wherein the exhaust gas purifying apparatus functions as a urea SCR system.

2. The use according to claim 1,
wherein the glass fibers have an average fiber diameter of 9 to 15 µm.

3. The use according to claim 1 or 2, wherein the mat material further contains an organic binder.

4. The use according to any one of claims 1 to 3, wherein the mat material further contains an expansive agent.

5. The use according to claim 4,
wherein the expansive agent contains at least one material selected from the group consisting of vermiculite, bentonite, bronze mica, perlite, expandable graphite, and expandable fluoromica.

6. An exhaust gas purifying apparatus comprising:
a casing;
an exhaust gas treating body housed in the casing; and
a holding sealing material wound around the exhaust gas treating body and provided between the exhaust gas treating body and the casing,
wherein the holding sealing material is the mat material according to any one of claims 1 to 5, and
wherein the exhaust gas purifying apparatus functions as a urea SCR system.

7. The exhaust gas purifying apparatus according to claim 6,
wherein the exhaust gas treating body is a catalyst supporting carrier or an exhaust gas filter.

## Patentansprüche

1. Verwendung eines Vliesmaterials, umfassend Glasfasern,
wobei die Glasfasern insgesamt 52 bis 66 Gew.-% SiO₂, 9 bis 26 Gew.-% Al₂O₃, 15 bis 27 Gew.-% CaO, 0 bis 9 Gew.-% MgO, 0 bis 4 Gew.-% TiO₂, 0 bis 5 Gew.-% ZnO und 0 bis 2 Gew.-% Na₂O und K₂O enthalten und im Wesentlichen frei von B₂O₃ sind,
als ein Halte- und Dichtungsmaterial in einer Abgasreinigungsvorrichtung, einschließlich einer Verschalung, einem Abgasbehandlungskörper, der in der Verschalung untergebracht ist, und wobei das Halte- und Dichtungsmaterial um den Abgasbehandlungskörper gewickelt und zwischen dem Abgasbehandlungskörper und der Verschalung bereitgestellt ist, und
wobei die Abgasreinigungsvorrichtung als ein Harnstoff-SCR-System fungiert.

2. Verwendung nach Anspruch 1,
wobei die Glasfasern einen durchschnittlichen Faserdurchmesser von 9 bis 15 µm aufweisen.

3. Verwendung nach Anspruch 1 oder 2, wobei das Vliesmaterial ferner ein organisches Bindemittel enthält.

4. Verwendung nach einem der Ansprüche 1 bis 3, wobei das Vliesmaterial ferner ein Dehnungsmittel enthält.

5. Verwendung nach Anspruch 4,
wobei das Dehnungsmittel wenigstens ein Material enthält, das ausgewählt ist aus der Gruppe bestehend aus Vermiculit, Bentonit, Bronzeglimmer, Perlit, dehnbarem Graphit und dehnbarem Fluorglimmer.

6. Abgasreinigungsvorrichtung, umfassend:
eine Verschalung;
einen Abgasbehandlungskörper, der in der Verschalung untergebracht ist; und
ein Halte- und Dichtungsmaterial, das um den Abgasbehandlungskörper gewickelt und zwischen dem Abgasbehandlungskörper und der Verschalung bereitgestellt ist,
wobei das Halte- und Dichtungsmaterial das Vliesmaterial nach einem der Ansprüche 1 bis 5 ist, und
wobei die Abgasreinigungsvorrichtung als ein Harnstoff-SCR-System fungiert.

7. Abgasreinigungsvorrichtung nach Anspruch 6,
wobei der Abgasbehandlungskörper ein katalysatorunterstützender Träger oder ein Abgasfilter ist.

## Revendications

1. Utilisation d'un matériau de mat comprenant des fibres de verre,
les fibres de verre contenant 52 à 66 % en poids de SiO₂, 9 à 26 % en poids de Al₂O₃, 15 à 27 % en poids de CaO, 0 à 9 % en poids de MgO, 0 à 4 % en poids de TiO₂, 0 à 5 % en poids de ZnO et 0 à 2 % en poids de Na₂O et de K₂O au total, et qui est sensiblement exempt de B₂O₃,
en tant que matériau de maintien et d'étanchéité dans un appareil de purification de gaz d'échappement comprenant un boîtier, un corps de traitement de gaz d'échappement logé dans le boîtier, et le matériau de maintien et d'étanchéité étant enroulé autour du corps de traitement de gaz d'échappement et ménagé entre le corps de traitement de gaz d'échappement et le boîtier, et
dans laquelle l'appareil de purification de gaz d'échappement fonctionne comme un système SCR à l'urée.

2. Utilisation selon la revendication 1,
dans laquelle les fibres de verre ont un diamètre de fibre moyen de 9 à 15 µm.

3. Utilisation selon la revendication 1 ou 2, dans laquelle le matériau de mat contient en outre un liant organique.

4. Utilisation selon l'une quelconque des revendications 1 à 3, dans laquelle le matériau de mat contient en outre un agent d'expansion.

5. Utilisation selon la revendication 4,
dans laquelle l'agent d'expansion contient au moins un matériau choisi dans le groupe constitué par la vermiculite, la bentonite, le mica de bronze, la perlite, le graphite expansible et le fluoromica expansible.

6. Appareil de purification de gaz d'échappement comprenant :
un boîtier;
un corps de traitement de gaz d'échappement logé dans le boîtier; et
un matériau de maintien et d'étanchéité enroulé autour du corps de traitement de gaz d'échappement et ménagé entre le corps de traitement de gaz d'échappement et le boîtier,
dans lequel le matériau de maintien et d'étanchéité est le matériau de mat selon l'une quelconque des revendications 1 à 5, et
dans lequel l'appareil de purification de gaz d'échappement fonctionne comme un système SCR à l'urée.

7. Appareil de purification de gaz d'échappement selon la revendication 6,
dans lequel le corps de traitement de gaz d'échappement est un support de catalyseur ou un filtre de gaz d'échappement.
